# EUROPEAN PATENT SPECIFICATION

(11) **EP 1 459 461 B1**
(45) Date of publication and mention of the grant of the patent: **06.12.2006**
(21) Application number: 02785264.9
(22) Date of filing: 21.10.2002
(51) Int. Cl.: H04B 7/005, H04B 7/26, H04Q 7/38

(54) **UTRA TDD TIME SLOTS ALLOCATION**
UTRA TDD ZEITSCHLITZENZUORDNUNG
ATTRIBUTION DE TRANCHES DE TEMPS UTRA TDD

(30) Priority: 15.12.2001 GB 0130013
(43) Date of publication of application: 22.09.2004
(73) Proprietor: MOTOROLA, INC., Schaumburg, IL 60196 (US)
(72) Inventor: BENSON, Maya, Swindon, Wiltshire SN5 8YQ (GB)
(74) Representative: Openshaw, Paul Malcolm
(86) International application number: PCT/EP2002/011770
(87) International publication number: WO 2003/052964

(56) References cited:
- EP-A- 0 979 017
- WO-A-01/01716
- GB-A- 2 285 900
- HOLMA H ET AL: "Interference considerations for the time division duplex mode of the UMTS Terrestrial Radio Access" IEEE JOURNAL ON SELECTED AREAS IN COMMUNICATIONS, AUG. 2000, IEEE, USA, vol. 18, no. 8, pages 1386-1393, XP002229854 ISSN: 0733-8716

## Description

### Field of the Invention

This invention relates to an apparatus for allocating timeslots and a method therefor, and in particular for a time division duplex cellular communication system.

### Background of the Invention

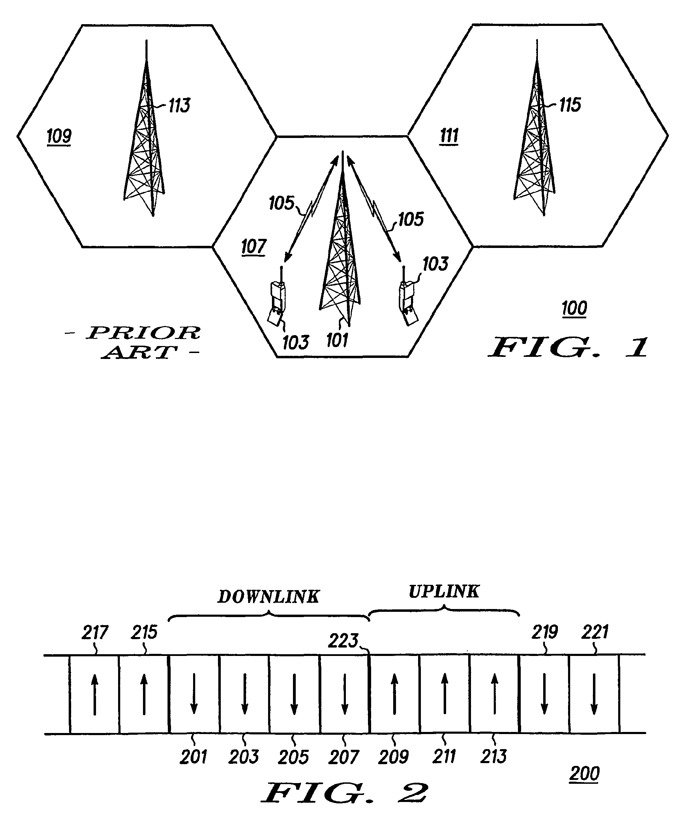

In a cellular communication system, each of the subscriber units (typically mobile stations, user equipment, user terminals etc) communicates with typically a fixed base station. Communication from the subscriber unit to the base station is known as uplink and communication from the base station to the subscriber unit is known as downlink. The total coverage area of the system is divided into a number of separate cells, each predominantly covered by a single base station. The cells are typically geographically distinct with an overlapping coverage area with neighbouring cells. FIG. 1 illustrates a cellular communication system 100. In the system, a base station 101 communicates with a number of subscriber units 103 over radio channels 105. In the cellular system, the base station 101 covers users within a certain geographical area 107, whereas other geographical areas 109, 111 are covered by other base stations 113, 115.

As a subscriber unit moves from the coverage area of one cell to the coverage area of another cell, the communication link will change from being between the subscriber unit and the base station of the first cell, to being between the subscriber unit and the base station of the second cell. This is known as a handover. Specifically, some cells may lie completely within the coverage of other larger cells.

All base stations are interconnected by a fixed network. This fixed network comprises communication lines, switches, interfaces to other communication networks and various controllers required for operating the network. A call from a subscriber unit is routed through the fixed network to the destination specific for this call. If the call is between two subscriber units of the same communication system the call will be routed through the fixed network to the base station of the cell in which the other subscriber unit currently is. A connection is thus established between the two serving cells through the fixed network. Alternatively, if the call is between a subscriber unit and a telephone connected to the Public Switched Telephone Network (PSTN) the call is routed from the serving base station to the interface between the cellular mobile communication system and the PSTN. It is then routed from the interface to the telephone by the PSTN.

A cellular mobile communication system is allocated a frequency spectrum for the radio communication between the subscriber units and the base stations. This spectrum must be shared between all subscriber units simultaneously using the system.

One method of sharing this spectrum is by a technique known as Code Division Multiple Access (CDMA). In a Direct Sequence CDMA (DS-CDMA) communication system, the signals are prior to being transmitted multiplied by a high rate code whereby the signal is spread over a larger frequency spectrum. A narrowband signal is thus spread and transmitted as a wideband signal. At the receiver, the original narrowband signal is regenerated by multiplication of the received signal with the same code. A signal spread by use of a different code will not be de-spread by the receiver but will remain a wide band signal and removed by filtering after the de-spreading operation. In the receiver, the majority of interference caused by interfering signals received in the same frequency spectrum as the wanted signal can thus be removed by filtering. Consequently, a plurality of subscriber units can be accommodated in the same wideband spectrum by allocating different codes for different subscriber units. Codes are chosen to minimise the interference caused between subscriber units typically by choosing orthogonal codes when possible. A further description of CDMA communication systems can be found in 'Spread Spectrum CDMA Systems for Wireless Communications', Glisic & Vucetic, Artech house Publishers, 1997, ISBN 0-89006-858-5. Examples of CDMA cellular communication systems are IS 95 standardised in North America and the Universal Mobile Telecommunication System (LTMTS) currently under standardisation in Europe.

One aspect of UMTS is a time division duplex mode. In this system the frequency spectrum is divided into a number of frequency channels with each frequency channel being further divided into time frames, each time frame having a number of time slots. In this system, different subscriber units are separated by being allocated different time slots which are orthogonal with time slots allocated to other users. One difference between the TDD mode of UMTS and previous Time Division Multiple Access (TDMA) systems, such as the Global System for Mobile Communication (GSM), is that more than one subscriber unit may be allocated for the same cell within each time slot. The signals from the different subscriber units are in TDD spread with a spreading code similar to a CDMA system. However, for UMTS TDD the spreading codes are significantly lower with spreading codes ranging from 1 to 16. Separation between different subscriber units within each time slot is achieved by using different spreading codes combined with joint detection and the thereto related interference reduction. Another difference between TDD and other TDMA systems is that the same frequency channel is used both for uplink and downlink communication such that some time slots of a time frame are allocated for uplink transmissions, whereas other time slots within the same time frame are allocated for downlink transmissions. Further description of the UMTS TDD communication system can be found in "Interference considerations for the time division duplex mode of the UMTS Terrestrial Radio Access", Holma, H.; Heikkinen, S.; Lehtinen, O.-A.; Toskala, A. IEEE Journal on Selected Areas in Communications, Volume: 18 Issue: 8, Aug. 2000
Page(s): 1386-1393.

Specifically, cellular mobile radio technologies using TDD are capable of allocating different numbers of time slots to uplink and downlink, which is an efficient method for dealing with traffic asymmetry. However, this technique has some disadvantages in systems such as the UMTS TDD communication system where interference is caused to neighbour cells. The interference is especially problematic in communication systems using a frequency reuse factor of 1 i.e. where the same frequency channel is used in adjacent cells. In this scenario, clashing of uplink and downlink time slots can occur in adjacent cells. The individual base station scrambling codes are not sufficiently long to reduce the resultant interference to acceptable levels. The current solution to the problem is synchronisation of uplink-downlink switching points for the adjacent base stations - i.e. by synchronisation of adjacent cells such that the same time intervals are allocated for uplink and downlink. However, this solution imposes a requirement that adjacent base stations have the same switching points between uplink and downlink timeslots. This in turn imposes limits the flexibility of resource allocation and thus significantly limits the overall capacity of the system as traffic distribution and specifically the degree of traffic asymmetry between uplink and downlink may vary significantly between cells. Therefore, a system that will provide increased capacity of a TDD communication system is desired.

### Summary of the Invention

The inventors of the current invention have realised that conventional approaches for time slot allocation in TDD communication systems are sub optimal and can be improved. The invention seeks to provide an improvement in the time slot allocation and specifically it seeks to improve the capacity of the communication system and increase flexibility in assigning time slots for asymmetric traffic.

Accordingly there is provided a method of allocating timeslots to subscriber units in a time division duplex communication system including at least a first and second substantially frame synchronised base station, the method comprising the steps of: determining a switching point in a first time frame of the first base station between uplink and downlink timeslots; determining power levels associated with communication from a plurality of subscriber units to be allocated time slots in the first time frame; and allocating time slots, of the first time frame to said plurality of subscriber units in response to said associated power levels by: designating at least a first set of time slots close to the switching point; determining a first power threshold; and allocating time slots of subscriber units to said first set of time slots only if the associated power levels are below said first threshold value.

According to a first feature of the invention, the time slots are allocated such that there is a concentration towards the switching point of time slots for subscriber units having relative lower associated power levels.

According to a second feature of the invention, said first set of time slots is selected so as to include the time of a second switching point in a second time frame of the second base station.

According to a third feature of the invention, time slots are allocated to subscriber units such that the associated power level increases with distance from the switching point.

According to a second aspect of the invention, there is provided an apparatus for allocating timeslots to subscriber units in a time division duplex communication system including at least a first and second substantially frame synchronised base stations, the apparatus comprising: means for determining a switching point in a first time frame of the first base station between uplink and downlink timeslots; means for determining power levels associated with communication from a plurality of subscriber units to be allocated time slots in the first time frame; and means fox allocating time slots of the first time frame to said plurality of subscriber units in response to said associated power levels comprising: means for designating at least a first set of time slots close to the switching point; means for determining a first power threshold; and means for allocating time slots of subscriber units to said first set of time slots only if the associated power levels are below said first threshold value.

### Brief Description of the Drawings

An embodiment of the present invention is described below, by way of example only, with reference to the Drawings, in which:
FIG. 1 is an illustration of a cellular communication system according to prior art;
FIG. 2 is an illustration of a time frame for a first base station of a TDD communication system in accordance with an embodiment of the invention;
FIG. 3 illustrates a TDD communication system comprising an apparatus for allocating time slots in accordance with an embodiment of the invention; and
FIG. 4 illustrates a flow chart for a method of allocating time slots in accordance with an embodiment of the invention.

### Detailed Description of a Preferred Embodiment

The following description focuses on an embodiment compliant with the current approach for the standardisation of UMTS TDD but it will be apparent that the invention is not limited to this application.

The TDD communication system comprises a plurality of base stations, each base station supporting a plurality of subscriber units. The base stations of the communication system are frame synchronised meaning that the begin and end time of a time frame of one base station is related to the begin and end time of another base station. Ideally, the begin and end times of one base station coincide exactly with the begin and end time of another base station but a significant deviation may occur in practical communication system. Typically, however the synchronisation deviation is less than the duration of a time slot and in many systems it is as little as a few symbol times.

FIG. 2 is an illustration of a time frame for a first base station of a TDD communication system in accordance with an embodiment of the invention.

The time frame 200 contains time slots 201 to 213 whereas time slots 215 and 217 belong to the previous time frame and time slot 219 and 221 belong to the following time frame.

The time frame 200 is divided into a set of downlink time slots 201 to 207 used for downlink communication and a set of uplink time slots 209 to 213 used for uplink communication. The partition point between the uplink time slots and the downlink time slots is known as the switching point 223. In the previous or following time frame, a different number of time slots may be used in each direction. For example, the previous time frame may have 3 downlink time slots and 4 uplink time slots, and the following time frame may have 5 downlink time slots and 2 uplink time slots. The switching point may thus change dynamically between time frames.

In the described embodiment adjacent cells, having frame synchronised base stations will employ a similar time frame. Due to the frame synchronisation, the begin and end times of the frames in the different cells are substantially the same. Hence, in this embodiment, where each time frame consist of a single consecutive set of downlink time slots and a single consecutive set of uplink time slots, clashes between uplink and downlink time slots of different cells are insignificant around the begin and end points of the time frames provided the synchronisation deviation is sufficiently low.

Preferably the switching points can move dynamically within a region (which may be equal to the entire time frame) and independently from one cell to the next.

However, unless the switching points within the time frames are synchronised, clashes will occur between uplink and downlink time slots of different cells. This can significantly degrade or prevent communication. For example, the transmit power of a subscriber unit close to a cell edge will be very high. If it is simultaneous with a downlink time slot of a receiving mobile, which is close albeit in an adjacent cell to the transmitting mobile, it will prevent communication to this second mobile. However, synchronising switching points will significantly degrade flexibility in time slot allocation resulting in significant capacity degradation when the traffic asymmetry varies between cells.

In accordance with an embodiment of the invention, power levels associated with communication from subscriber units are determined, and time slots are allocated within a time frame in response to said associated power levels. In accordance with the preferred embodiment, time slots are allocated such that there is a concentration towards the switching point of time slots for subscriber units having relative lower associated power levels, and specifically time slots are allocated to subscriber units such that the associated power level increases with distance from the switching point.

Consequently, the impact of clashes between uplink and downlink time slots in different cells is minimised as time slots within the region, wherein the switching point typically will lie, have minimum transmit powers and therefore cause the least interference to other subscriber units.

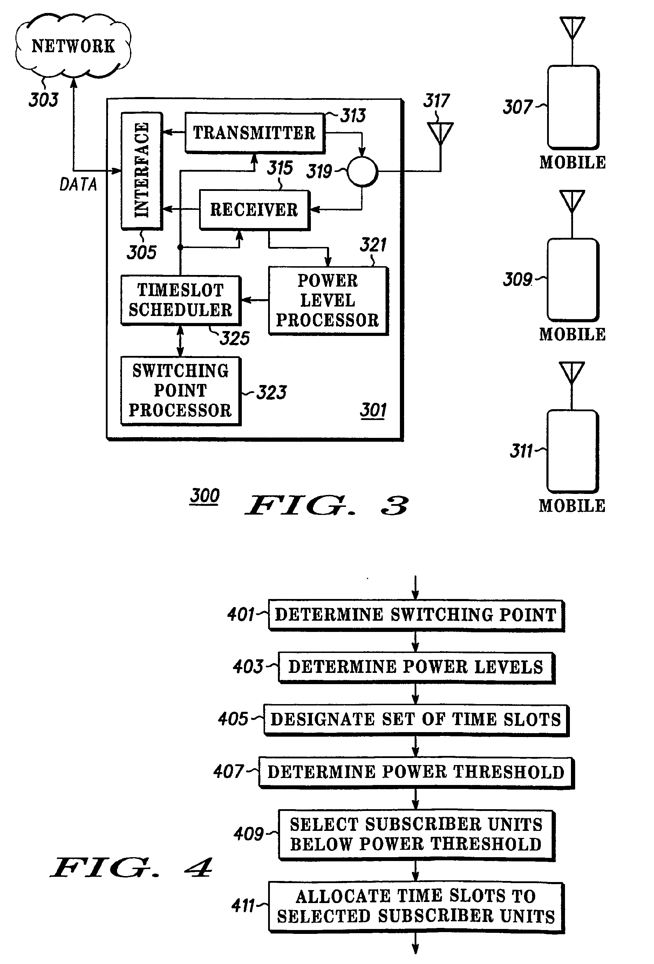

FIG. 3 illustrates a TDD communication system including a base station comprising an apparatus for allocating time slots.

The base station 301 is connected to a network 303 through a data interface 305. The network 303 comprises radio network controllers, routers, switches, billing processors, other base stations, network gateways, network routers, network switches and any other element required or desired for operating a cellular communication system as is well known in the art. The network 303 provides data to the base station 301 for transmission to the subscriber units 307,309,311 supported by that base station 301. The base station 301 provides data to the network 303 received from the supported subscriber units 307, 309, 311. In addition control and information data used for the operation and configuration of the communication system, including the base station 301 and the subscriber units 307, 309, 311, are exchanged with the network 303.

The interface 305 is connected to a transmitter 313, which performs all functions required for transmitting to the subscriber units 307, 309, 311. In addition, the interface is connected to a receiver 315, which performs all functions required for receiving transmissions from the subscriber units 307, 309, 311. The receiver 315 and transmitter 313 operate in accordance with the transmission protocols and standards of the given communication system. The receiver 315 and transmitter 313 are connected to the same antenna 317 through a switch 319 which switches between transmission and reception as is well known in the art.

The base station 301 further comprises a power level processor 321, which is operable to determine power levels associated with different subscriber units that are to be allocated time slots for communication. It is well known in the art to control transmit powers for both uplink and downlink transmissions by using power control loops, and in the preferred embodiment the power level processor determines the associated power level from the current state of a power control loop. In the preferred embodiment, where the apparatus for allocation of time slots is comprised in the base station 301, the downlink transmit power levels are directly available. In some embodiments, the associated power control levels may be determined by the subscriber units 307, 309, 311 reporting their current transmit power levels or they may be derived from received power levels and propagation attenuation estimates.

The base station 301 further comprises a switching point processor 323, which determines a switching point between the uplink and downlink time slots. Typically, the switching point will be determined dependent on the resource requirements of the subscriber units 307, 309, 311. Thus in the preferred embodiment, the communication requirements of the subscriber units 307, 309, 311 are known for a given time frame and the distribution of time slots between the uplink and downlink time slots, as well as selection of which subscriber units will be supported, are performed by a resource allocator. It will be clear to the person skilled in the art that any suitable method for dividing resource between the subscriber units 307, 309, 311 and selecting a switching point may be used without detracting from the invention.

In the preferred embodiment, the resource allocator is embedded in the time slot scheduler 325, which is connected to the power level processor 321, and the switching point processor 323. The time slot scheduler 325 selects for each time frame which time slots are allocated as uplink time slots and which are downlink time slots. It further determines which subscriber units are to be allocated an uplink and/or downlink time slot and finally it allocates specific time slots to specific subscriber units. The time slot scheduler 325 is also connected to the receiver 315, transmitter 313 and interface 305 in order to control the transmission and reception as well as to receive control and traffic information needed for the operation of the time slot scheduler 325.

FIG. 4 illustrates a flow chart for a method of allocating time slots in accordance with an embodiment of the invention. The figure illustrates the performance of the apparatus of FIG. 3 in the described embodiment.

In step 401, the switching point processor determines one or more switching points within the time frame. This is in the preferred embodiment done by prioritising subscriber units that are requiring allocation of a time slot, and allocating to the top prioritised subscriber units. The number of time slots allocated for downlink and uplink will thus depend on how many of the top prioritised subscriber units require a downlink time slot and how many require an uplink time slot. The set of subscriber units that require time slot in a given time frame may vary from time frame to time frame. However, in the preferred embodiment the set of subscriber units requiring time slots to be allocated only changes when a new call is set up or an existing call is terminated. In this embodiment, many consecutive time frames may thus have unchanged requirements and the switching point may be constant for these time frames. In this embodiment, a new determination of a switching point is thus not necessarily made for each time frame but only when instigated by a call set-up or termination.

In step 403, the power levels associated with the communication from a plurality of subscriber units are determined by the power level processor 321. In the preferred embodiment, an estimated transmit power for each uplink subscriber unit and of the base station for each downlink base station is determined. Any suitable known method for estimating or determining associated power levels may be used without detracting from the current invention. In the preferred embodiment, the associated power levels are determined only for the top prioritised subscriber units i.e. only for those that will be allocated a time slot in the time frame. However, in other embodiments the associated power level is determined for all subscriber units or for a much smaller set of subscriber units, for example only until enough subscriber units to fill in a defined region around the switching point have been found with associated power levels below a given threshold.

In step 405, a set of time slots close to the switching point are designated. These time slots are in the preferred embodiment one or more time slots adjacent to or surrounding the switching point. Alternatively and/or additionally, the set of time slots may be chosen dependent on a second switching point relating to a second time frame of a second base station. In this embodiment, the designation is such that the set of time slots will include the second switching point. The second switching point may only be known approximately or within a range, and the set of time slots will be chosen sufficiently large to include the time of the second switching point with a high or reasonable probability.

In step 407 a threshold power is determined. In the preferred embodiment, this is done by the power level processor 321 by ordering the associated power levels of the top prioritised subscriber units, and setting the power threshold such that the number of subscriber units having associated power levels lower than the threshold is equal to the number of time slots in the set. Hence, in this embodiment if three time slots are designated in the set, the threshold is set slightly higher than the associated power level of the subscriber unit having the third lowest associated power level.

In other embodiments, the power threshold is predefined or is determined in response to external parameters such as the traffic loading and/or interference levels in one or more cells. The power threshold may thus be static or dynamically changing and may be a relative or absolute value.

In step 409, the subscriber units below the power threshold are selected, and in step 411 the selected subscriber units are allocated time slots contained in the set of designated time slots whereas the remaining subscriber units are allocated time slots not contained in the set. In the preferred embodiment, the time slots are allocated to subscriber units such that the associated power level increases with distance from the switching point but in other embodiments the time slots within the set may not be allocated strictly in order of associated power level.

The process iterates for the next time frame. In some embodiments, the process will iterate for a second set of time slots of the same time frame. In this embodiment, a second set of time slots is designated - preferably adjacent to or surrounding the first set of time slots. A second power threshold is determined in a similar fashion to the first power threshold, and subscriber units having associated power levels in between the first and second power threshold are allocated time slots in the second set. The process may be iterated for as many sets as is desired, and in an extreme scenario each set comprises a single time slot resulting in a distribution wherein the associated power level increases with increasing distance between the time slot and the switching point.

Consequently, subscriber units having large associated power levels are concentrated towards the switching points of the time frames and thus the interference caused by clashes between uplink and downlink time slots of neighbouring cells is significantly reduced. Thus users at the cell edges, for which the uplink and downlink transmissions are high powered, will be allocated time slots furthest from the switching point where the probability of clashing of uplink and downlink transmissions between neighbouring cells is small. Low-power users are allocated middle time-slots close to the switching points, where there is a higher probability of clashing between uplink and downlink time slots of different cells. However, because of the low signal power the effects of clashing are minimal.

As the probability of destructive clashes between uplink and downlink time slots for cells having non-synchronised switching points is significantly reduced, the flexibility of selecting switching points in neighbouring cells is significantly increased. This increases the flexibility in allocating time slots in different cells thereby leading to a significantly increased capacity of the system.

It is within the contemplation of the invention that each time frame may comprise more than one switching point in which case the described approach can be applied to one, more or all of the switching points. Specifically, if the frame synchronisation deviation is sufficiently large for uplink transmissions in one cell to significantly impact downlink communication in another cell (or vice versa), the begin and/or end points of a time frame may be considered as switching points.

Whilst the specific, and preferred implementations of the embodiments of the present invention are described above, it is clear that variations and modifications of such inventive concepts could be readily applied by one skilled in the art.

The components and functionality described may be implemented in any suitable manner to provide suitable apparatus. Specifically, the components may consist of a single discrete entity, or may alternatively be formed by adapting existing parts or components. The apparatus for allocation of timeslots may thus be implemented for example as an independent unit, as a part of a network element such as a base station or may be distributed between a plurality of entities. As such the required adaptation may be implemented in the form of processor-implementable instructions stored on a storage medium, such as a floppy disk, hard disk, PROM, RAM or any combination of these or other storage media. Furthermore, the functionality may be implemented in the form of hardware, firmware, software, or any combination of these.

## Claims

1. A method of allocating timeslots to subscriber units in a time division duplex communication system including at least a first and second substantially frame synchronised base station, the method comprising the steps of:
determining a switching point in a first time frame of the first base station between uplink and downlink timeslots (401);
determining power levels associated with communication from a plurality of subscriber units to be allocated time slots in the first time frame 403; and
allocating time slots of the first time frame to said plurality of subscriber units in response to said associated power levels by:
designating at least a first set of time slots close to the switching point (405);
determining a first power threshold (407); and
allocating time slots of subscriber units to said first set of time slots only if the associated transmission power levels are below said first threshold value (411).

2. A method of allocating time slots as claimed in claim 1 wherein the time slots are allocated such that there is a concentration towards the switching point of time slots for subscriber units having relative lower associated power levels.

3. A method of allocating time slots as claimed in claim 1 or 2 wherein the step of allocating time slots further comprises:
designating a second set of time slots close to the switching point;
determining a second power threshold;
and allocating time slots of subscriber units to said second set of time slots only if the associated power levels are below said second threshold value and above said first threshold value.

4. A method of allocating time slots as claimed in any preceding claim wherein said first power threshold is determined in response to the associated power levels of the plurality of subscriber units.

5. A method of allocating time slots as claimed in any preceding claim wherein said first set of time slots comprises a single time slot

6. A method of allocating time slots as claimed in any preceding claim wherein said first set of time slots comprises a group of time slots adjacent to the switching point.

7. A method of allocating time slots as claimed in any preceding claim wherein said first set of time slots is selected so as to include the time of a second switching point in a second time frame of the second base station.

8. A method of allocating time slots as claimed in any previous claim wherein time slots are allocated to subscriber units such that the associated power level increases with distance from the switching point.

9. A method of allocating time slots as claimed in any previous claim wherein said plurality of subscriber units includes all subscriber units requesting time slots

10. An apparatus for allocating timeslots to subscriber units in a time division duplex communication system including at least a first and second substantially frame synchronised base stations, the apparatus comprising:
means for determining a switching point in a first time frame of the first base station between uplink and downlink timeslots (323);
means for determining power levels associated with communication from a plurality of subscriber units to be allocated time slots in the first time frame (321); and
means for allocating time slots of the first time frame to said plurality of subscriber units in response to said associated power levels (325) comprising:
means for designating at least a first set of time slots dose to the switching point;
means for determining a first power threshold; and
means for allocating time slots of subscriber units to said first set of time slots only if the associated power levels are below said first threshold value.

11. An apparatus for allocating timeslots as claimed in claim 10 wherein the means for allocating time slots is operable to allocate time slots such that there is a concentration towards the switching point of time slots for subscriber units having relative lower associated power levels.

12. An apparatus for allocating timeslots as claimed in claim 10 or 11 wherein the means for allocating time slots further comprises:
means for designating a second set of time slots close to the switching point;
means for determining a second power threshold; and
means for allocating time slots of subscriber units to said second set of time slots only if the associated power levels are below said second threshold value and above said first threshold value.

13. An apparatus for allocating timeslots as claimed in one of claims 10-12 wherein the means for determining a first power threshold is operable to determine the first power threshold in response to the associated power levels of the plurality of subscriber units.

14. An apparatus for allocating timeslots as claimed in one of claims 10-13 wherein said first set of time slots comprises a single time slot

15. An apparatus for allocating timeslots as claimed in one of claims 10-14 wherein said first set of time slots comprises a group of time slots adjacent to the switching point.

16. An apparatus for allocating timeslots as claimed in one of claims 10-15 wherein the means for designating at least a first set of time slots is operable to select said first set of time slots so as to include the time of a second switching point in a second time frame of the second base station.

17. An apparatus for allocating timeslots as claimed in any previous claim 10 to 16 wherein the means for allocating time slots time slots is operable to allocate subscriber units such that the associated power level increases with distance from the switching point.

18. An apparatus for allocating timeslots as claimed in any previous claim 10 to 17 wherein said plurality of subscriber units includes all subscriber units requesting time slots

## Patentansprüche

1. Verfahren zum Zuweisen von Zeitslots an Teilnehmereinheiten in einem Zeitduplex- (Time Division Duplex) Kommunikationssystem, enthaltend wenigstens eine erste und eine zweite im Wesentlichen rahmensynchronisierte Basisstation, wobei das Verfahren die Schritte umfasst:
Bestimmen eines Schaltpunktes in einem ersten Zeitrahmen der ersten Basisstation zwischen Aufwärtsverbindungs- und Abwärtsverbindungs-Zeitslots (401);
Bestimmen von Leistungspegeln, die zu einer Kommunikation von einer Mehrzahl von Teilnehmereinheiten, denen Zeitslots in dem ersten Zeitrahmen zugewiesen werden sollen, gehören (403); und
Zuweisen von Zeitslots des ersten Zeitrahmens an die Mehrzahl von Teilnehmereinheiten als Antwort auf die zugehörigen Leistungspegel durch:
Ausersehen wenigstens eines ersten Satzes von Zeitslots nahe dem Schaltpunkt (403);
Bestimmen eines ersten Leistungsschwellenwertes (407); und
Zuweisen von Zeitslots von Teilnehmereinheiten an den ersten Satz von Zeitslots nur dann, wenn die zugehörigen Sendeleistungspegel unterhalb des ersten Schwellenwertes liegen (411).

2. Verfahren zum Zuweisen von Zeitslots wie in Anspruch 1 beansprucht, wobei die Zeitslots so zugewiesen werden, dass es auf den Schaltpunkt hin eine Konzentration von Zeitslots für Teilnehmereinheiten gibt, die relativ niedrigere zugehörige Leistungspegel haben.

3. Verfahren zum Zuweisen von Zeitslots wie in Anspruch 1 oder 2 beansprucht, wobei der Schritt des Zuweisens von Zeitslots weiter umfasst:
Ausersehen eines zweiten Satzes von Zeitslots nahe des Schaltpunktes;
Bestimmen eines zweiten Leistungsschwellenwertes; und
Zuweisen von Zeitslots von Teilnehmereinheiten an den zweiten Satz von Zeitslots nur dann, wenn die zugehörigen Leistungspegel unterhalb des zweiten Schwellenwertes und oberhalb des ersten Schwellenwertes liegen.

4. Verfahren zum Zuweisen von Zeitslots wie in einem der vorangehenden Ansprüche beansprucht, wobei der erste Leistungsschwellenwert als Antwort auf die zugehörigen Leistungspegel der Mehrzahl von Teilnehmereinheiten bestimmt wird.

5. Verfahren zum Zuweisen von Zeitslots wie in einem vorangehenden Anspruch beansprucht, wobei der erste Satz von Zeitslots einen einzelnen Zeitslot umfasst.

6. Verfahren zum Zuweisen von Zeitslots wie in einem der vorangehenden Ansprüche beansprucht, wobei der erste Satz von Zeitslots eine Gruppe von dem Schaltpunkt benachbarten Zeitslot umfasst.

7. Verfahren zum Zuweisen von Zeitslots, wie in einem der vorangehenden Ansprüche beansprucht, wobei der erste Satz von Zeitslots so ausgewählt ist, dass er die Zeit eines zweiten Schaltpunktes in einem zweiten Zeitrahmen der zweiten Basisstation enthält.

8. Verfahren zum Zuweisen von Zeitslots wie in einem vorangehenden Anspruch beansprucht, wobei die Zeitslots Teilnehmereinheiten so zugewiesen werden, dass der zugehörige Leistungspegel mit der Entfernung von dem Schaltpunkt wächst.

9. Verfahren zum Zuweisen von Zeitslots wie in einem vorangehenden Anspruch beansprucht, wobei die Mehrzahl von Teilnehmereinheiten alle Teilnehmereinheiten umfasst, die Zeitslots anfordern.

10. Vorrichtung zum Zuweisen von Zeitslots an Teilnehmereinheiten in einem Zeitduplex- (Time Division Duplex) Kommunikationssystem, enthaltend wenigstens eine erste und eine zweite im Wesentlichen rahmensynchronisierte Basisstation, wobei die Vorrichtung umfasst:
Mittel zum Bestimmen eines Schaltpunktes in einem ersten Zeitrahmen der ersten Basisstation zwischen Aufwärtsverbindungs- und Abwärtsverbindungs-Zeitslots (323);
Mittel zum Bestimmen von Leistungspegeln, die zu einer Kommunikation von einer Mehrzahl von Teilnehmereinheiten, denen Zeitslots in dem ersten Zeitrahmen zugewiesen werden sollen, gehören (321); und
Mittel zum Zuweisen von Zeitslots des ersten Zeitrahmens an die Mehrzahl von Teilnehmereinheiten als Antwort auf die zugehörigen Leistungspegel (325), umfassend:
Mittel zum Ausersehen wenigstens einen ersten Satzes von Zeitslots nahe dem Schaltpunkt;
Mittel zum Bestimmen eines ersten Leistungsschwellenwertes; und
Mittel zum Zuweisen von Zeitslots von Teilnehmereinheiten an den ersten Satz von Zeitslots nur dann, wenn die zugehörigen Leistungspegel unterhalb des ersten Schwellenwertes liegen.

11. Vorrichtung zum Zuweisen von Zeitslots wie in Anspruch 10 beansprucht, wobei die Mittel zum Zuweisen von Zeitslots betreibbar sind, Zeitslots so zuzuweisen, dass es auf den Schaltpunkt hin eine Konzentration von Zeitslots für Teilnehmereinheiten gibt, die relativ niedrigere zugehörige Leistungspegel haben.

12. Vorrichtung zum Zuweisen von Zeitslots wie in Anspruch 10 oder 11 beansprucht, wobei die Mittel zum Zuweisen von Zeitslots weiter umfassen:
Mittel zum Ausersehen eines zweiten Satzes von Zeitslots nahe dem Schaltpunkt;
Mittel zum Bestimmen eines zweiten Leistungsschwellenwertes; und
Mittel zum Zuweisen von Zeitslots von Teilnehmereinheiten an den zweiten Satz von Zeitslots nur dann, wenn die zugehörigen Leistungspegel unterhalb des zweiten Schwellenwertes und oberhalb des ersten Schwellenwertes liegen.

13. Vorrichtung zum Zuweisen von Zeitslots wie in einem Ansprüche 10 bis 12 beansprucht, wobei die Mittel zum Bestimmen eines ersten Leistungsschwellenwertes betreibbar sind, den ersten Schwellenwert als Antwort auf die zugehörigen Leistungspegel der Mehrzahl von Teilnehmereinheiten zu bestimmen.

14. Vorrichtung zum Zuweisen von Zeitslots wie in einem der Ansprüche 10 bis 13 beansprucht, wobei der erste Satz von Zeitslots einen einzelnen Zeitslot umfasst.

15. Vorrichtung zum Zuweisen von Zeitslots wie in einem der Ansprüche 10 bis 14 beansprucht, wobei der erste Satz von Zeitslots eine Gruppe von dem Schaltpunkt benachbarten Zeitslots umfasst.

16. Vorrichtung zum Zuweisen von Zeitslots wie in einem der Ansprüche 10 bis 15 beansprucht, wobei die Mittel zum Ausersehen wenigstens eines ersten Satzes von Zeitslots betreibbar sind, den ersten Satz von Zeitslots so auszuwählen, dass er die Zeit eines zweiten Schaltpunktes in einem zweiten Zeitrahmen der zweiten Basisstation enthält.

17. Vorrichtung zum Zuweisen von Zeitslots wie in einem der vorangehenden Ansprüche 10 bis 16 beansprucht, wobei die Mittel zum Zuweisen von Zeitslots betreibbar sind, Teilnehmereinheiten so zuzuweisen, dass der zugehörige Leistungspegel mit der Entfernung von dem Schaltpunkt wächst.

18. Vorrichtung zum Zuweisen von Zeitslots wie in einem der vorangehenden Ansprüche 10 bis 17 beansprucht, wobei die Mehrzahl von Teilnehmereinheiten alle Teilnehmereinheiten umfasst, die Zeitslots anfordern.

## Revendications

1. Procédé d'attribution de tranches de temps à des unités d'abonnés dans un système de communication duplex à répartition dans le temps incluant au moins une première et une seconde station de base à trames sensiblement synchronisées, le procédé comprenant les étapes consistant à :
déterminer un point de commutation dans une première trame de temps de la première station de base entre des tranches de temps de liaison montante et de liaison descendante (401) ;
déterminer des niveaux de puissance associés à une communication depuis une pluralité d'unités d'abonnés auxquelles doivent être attribuées des tranches de temps dans la première trame de temps (403) ; et
attribuer des tranches de temps de la première trame de temps à ladite pluralité d'unités d'abonnés en réponse auxdits niveaux de puissance associés en :
désignant au moins un premier ensemble de tranches de temps proche du point de commutation (405) ;
déterminant un premier seuil de puissance (407) ; et
attribuant des tranches de temps d'unités d'abonnés audit premier ensemble de tranches de temps uniquement si les niveaux de puissance de transmission associés sont en dessous de ladite première valeur de seuil (411).

2. Procédé d'attribution de tranches de temps tel que revendiqué dans la revendication 1, dans lequel les tranches de temps sont attribuées de sorte qu'il y ait une concentration vers le point de commutation de tranches de temps pour les unités d'abonnés ayant des niveaux de puissance associés relatifs inférieurs.

3. Procédé d'attribution de tranches de temps tel que revendiqué dans la revendication 1 ou 2, dans lequel l'étape d'attribution de tranches de temps comprend en outre :
la désignation d'un second ensemble de tranches de temps proche du point de commutation ;
la détermination d'un second seuil de puissance ;
et l'attribution de tranches de temps d'unités d'abonnés audit second ensemble de tranches de temps uniquement si les niveaux de puissance associés sont en dessous de ladite seconde valeur de seuil et au-dessus de ladite première valeur de seuil.

4. Procédé d'attribution de tranches de temps tel que revendiqué dans l'une quelconque des revendications précédentes, dans lequel ledit premier seuil de puissance est déterminé en réponse aux niveaux de puissance associés de la pluralité d'unités d'abonnés.

5. Procédé d'attribution de tranches de temps tel que revendiqué dans l'une quelconque des revendications précédentes, dans lequel ledit premier ensemble de tranches de temps comprend une seule tranche de temps.

6. Procédé d'attribution de tranches de temps tel que revendiqué dans l'une quelconque des revendications précédentes, dans lequel ledit premier ensemble de tranches de temps comprend un groupe de tranches de temps adjacent au point de commutation.

7. Procédé d'attribution de tranches de temps tel que revendiqué dans l'une quelconque des revendications précédentes, dans lequel ledit premier ensemble de tranches de temps est sélectionné afin d'inclure le temps d'un second point de commutation dans une seconde trame de temps de la seconde station de base.

8. Procédé d'attribution de tranches de temps tel que revendiqué dans l'une quelconque des revendications précédentes, dans lequel des tranches de temps sont attribuées à des unités d'abonnés de sorte que le niveau de puissance associé augmente avec la distance par rapport au point de commutation.

9. Procédé d'attribution de tranches de temps tel que revendiqué dans l'une quelconque des revendications précédentes, dans lequel ladite pluralité d'unités d'abonnés inclut toutes les unités d'abonnés demandant des tranches de temps.

10. Appareil destiné à attribuer des tranches de temps à des unités d'abonnés dans un système de communication duplex à répartition dans le temps incluant au moins une première et une seconde station de base à trames sensiblement synchronisées, l'appareil comprenant :
un moyen pour déterminer un point de commutation dans une première trame de temps de la première station de base entre des tranches de temps de liaison montante et de liaison descendante (323) ;
un moyen pour déterminer des niveaux de puissance associés à une communication depuis une pluralité d'unités d'abonnés auxquelles doivent être attribuées des tranches de temps dans la première trame de temps (324) ; et
un moyen pour attribuer des tranches de temps de la première trame de temps à ladite pluralité d'unités d'abonnés en réponse auxdits niveaux de puissance associés (325) comprenant :
un moyen pour désigner au moins un premier ensemble de tranches de temps proche du point de commutation ;
un moyen pour déterminer un premier seuil de puissance ; et
un moyen pour attribuer des tranches de temps d'unités d'abonnés audit premier ensemble de tranches de temps uniquement si les niveaux de puissance associés sont en dessous de ladite première valeur de seuil.

11. Appareil destiné à attribuer des tranches de temps tel que revendiqué dans la revendication 10, dans lequel le moyen pour attribuer des tranches de temps est exploitable pour attribuer des tranches de temps de sorte qu'il y ait une concentration vers le point de commutation de tranches de temps pour les unités d'abonnés ayant des niveaux de puissance associés relatifs inférieurs.

12. Appareil destiné à attribuer des tranches de temps tel que revendiqué dans la revendication 10 ou 11, dans lequel le moyen pour attribuer des tranches de temps comprend en outre :
un moyen pour désigner un second ensemble de tranches de temps proche du point de commutation ;
un moyen pour déterminer un second seuil de puissance ; et
un moyen pour attribuer des tranches de temps d'unités d'abonnés audit second ensemble de tranches de temps uniquement si les niveaux de puissance associés sont en dessous de ladite seconde valeur de seuil et au-dessus de ladite première valeur de seuil.

13. Appareil destiné à attribuer des tranches de temps tel que revendiqué dans une des revendications 10 à 12, dans lequel le moyen pour déterminer un premier seuil de puissance est exploitable pour déterminer le premier seuil de puissance en réponse aux niveaux de puissance associés de la pluralité d'unités d'abonnés.

14. Appareil destiné à attribuer des tranches de temps tel que revendiqué dans une des revendications 10 à 13, dans lequel ledit premier ensemble de tranches de temps comprend une seule tranche de temps.

15. Appareil destiné à attribuer des tranches de temps tel que revendiqué dans une des revendications 10 à 14, dans lequel ledit premier ensemble de tranches de temps comprend un groupe de tranches de temps adjacent au point de commutation.

16. Appareil destiné à attribuer des tranches de temps tel que revendiqué dans une des revendications 10 à 15, dans lequel le moyen pour désigner au moins un premier ensemble de tranches de temps est exploitable pour sélectionner ledit premier ensemble de tranches de temps afin d'inclure le temps d'un second point de commutation dans une seconde trame de temps de la seconde station de base.

17. Appareil destiné à attribuer des tranches de temps tel que revendiqué dans l'une quelconque des revendications 10 à 16 précédentes, dans lequel le moyen pour attribuer des tranches de temps est exploitable pour attribuer des tranches de temps à des unités d'abonnés de sorte que le niveau de puissance associé augmente avec la distance par rapport au point de commutation.

18. Appareil destiné à attribuer des tranches de temps tel que revendiqué dans l'une quelconque des revendications 10 à 17 précédentes, dans lequel ladite pluralité d'unités d'abonnés inclut toutes les unités d'abonnés demandant des tranches de temps.
